# EUROPEAN PATENT SPECIFICATION

(11) **EP 4 483 161 B1**
(45) Date of publication and mention of the grant of the patent: **11.11.2026**
(21) Application number: 23707189.9
(22) Date of filing: 21.02.2023
(51) Int. Cl.: G01N 1/30

(54) **FIXATIVE SOLUTIONS AND METHODS FOR USING SAME**
FIXIERLÖSUNGEN UND VERFAHREN ZU IHRER VERWENDUNG
SOLUTIONS DE FIXATEUR ET LEURS PROCÉDÉS D'UTILISATION

(30) Priority: 21.02.2022 EP 22157743
(43) Date of publication of application: 01.01.2025
(73) Proprietor: Stichting Radboud Universiteit, 6525 XZ Nijmegen (NL)
(72) Inventor: HUCK, Wilhelmus Theodorus Stefanus, 6525 XZ Nijmegen (NL); MATULA, Kinga, 6525 XZ Nijmegen (NL); RIVELLO, Francesca Maria, 6525 XZ Nijmegen (NL)
(74) Representative: V.O.
(86) International application number: PCT/NL2023/050083
(87) International publication number: WO 2023/158313

(56) References cited:
- WO-A1-2009/080308
- WO-A1-2021/133845
- WO-A1-2021/174051
- CN-A- 113 063 646
- GERLACH JAN. P. ET AL: "Combined quantification of intracellular (phospho-)proteins and transcriptomics from fixed single cells", vol. 9, no. 1, 6 February 2019 (2019-02-06), pages 1469, XP055800106, Retrieved from the Internet <URL:https://www.nature.com/articles/s41598-018-37977-7.pdf> [retrieved on 20230419], DOI: 10.1038/s41598-018-37977-7

## Description

### Field of the Invention

The invention is in the field of solutions and methods for fixating cells.

### Background of the Invention

Modern-day biochemical research focusses to a large extent on analysing the transcriptome and/or proteome of cells to gain information on the biochemical pathways in said cells. To this end, the mRNA and proteins need to be isolated from said cells. However, when using living cells, only good quality of mRNA and membrane proteins can be obtained, but not of intracellular proteins as well. To isolate the intracellular proteins the cells need to be permeabilized, i.e. the membrane and/or cell wall is made permeable, most commonly done by contacting the cells with a surfactant. During permeabilization proteins and short fragments of RNA can be released and the cells typically get stressed, and its RNA is degraded.

To avoid this problem, cells are usually first fixated with a fixative that crosslinks biomolecules, in particular proteins, in said cells so as to stabilize and preserve the cellular contents during permeabilization. One of the most commonly used fixatives is paraformaldehyde, which however results in a very poor quality of mRNA. Likewise, the use of alcohol-based fixation (e.g. methanol) yields only a moderate mRNA quality, and poor protein detection as the methanol typically changes the conformation of proteins.

Another fixation method uses a fixative solution of the reversible crosslinkers dithiobis(succinimidyl propionate) (DSP) and succinimidyl-3-(2-pyridyldithio)propionate) (SPDP) in equimolar concentrations of 2.5 mM. With said method, model B lymphocyte cancer cells (BJABs) were fixated and analysed (J.P. Gerlach et al., Scientific Reports 2019, 9:1469; Rivello et al., Cell Reports Methods 2021, 1, 100070).

Further background references are CN 113 063 646 A, WO 2021/133845 A1, WO 2009/080308 A1, and WO 2021/174051 A1.

However, several problems arise when using DSP and SPDP as crosslinkers. First, DSP is prone to crystallize in aqueous solutions, thereby rendering a fixating protocol using DSP unreliable. Moreover, prior art protocols using DSP and/or SPDP result in an mRNA and/or protein quality that leave room for improvement. Finally, the prior art protocol by Gerlach *et al.* typically yields unsatisfactory results regarding both mRNA quality and protein counts when primary cells are fixated.

As such, there is a clear need in the art for better fixating protocols and/or more stable fixative solutions. In particular, it is a desire to provide a fixating protocol that improves the quality of isolated mRNA and/or proteins, more specifically intracellular proteins. Moreover, it is desired to provide a method for fixating primary cells that yields satisfactory results.

### Summary of the Invention

In order to better address one or more of the foregoing desires, the invention provides, in one aspect an *in vitro* method for fixating at least one cell, wherein said method comprises the step of
a) contacting the at least one cell with a liquid, a compound of Formula I, and a compound of Formula II, so as to form a mixture;

wherein the concentration of the compound of Formula I in said mixture is in a range of from 0.8 mM to 2.4 mM, preferably in a range of from 1.0 mM to 2.0 mM, more preferably in a range of from 1.3 mM to 1.7 mM;
wherein the concentration of the compound of Formula II in said mixture is sufficient to dissolve substantially all of the compound of Formula I in said mixture; wherein the compound of Formula I is: 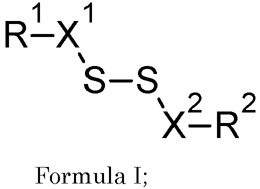 wherein the compound of Formula II is: 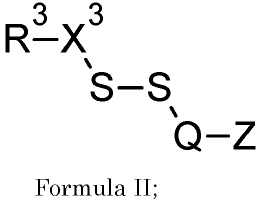
wherein R¹, R², and R³ are each independently selected from the group consisting of -C(O)O-N-succinimide, -C(O)F, -C(O)Cl, -C(O)Br, -C(O)-N₃, -C(O)O-pentafluorophenyl, -C(O)O-N-benzotriazole, -C(O)O-phthalimide, -C(O)-O-C(O)CH₃, -NCS, -NCO, -S(O)₂Cl, -S(O)₂F, phenylsulfonyl fluoride, phenylsulfonyl chloride, and C₂ epoxidyl; preferably R¹, R², and R³ are each -C(O)O-*N*-succinimide;
wherein X¹, X², and X³ are each independently selected from the group consisting of C₁-C₆ alkylene, and phenylene, preferably each of X¹, X², and X³ are ethylene; wherein Q is a bond or C₁₋₆ alkylene, preferably Q is a bond;
wherein Z is heteroaryl or aryl, preferably Z is 2-pyridyl; and wherein each alkylene, phenylene, heteroaryl, and aryl is optionally substituted.

In another aspect, the invention relates to a method for preparing a fixative solution comprising a compound of Formula I and a compound of Formula II, wherein said method comprises the steps of:
a) contacting a compound of Formula I with a solvent, preferably dimethyl sulfoxide, so as to form a first solution;
b) contacting said first solution with a compound of Formula II, so as to form a second solution;
c) adding a buffer solution, preferably dropwise, to the second solution, so as to form the fixative solution;

wherein the concentration of the compound of Formula I in said fixative solution is in a range of from 0.8 mM to 2.4 mM, preferably in a range of from 1.0 mM to 2.0 mM, more preferably in a range of from 1.3 mM to 1.7 mM;
wherein the concentration of the compound of Formula II in said fixative solution is sufficient to dissolve substantially all of the compound of Formula I in said fixative solution;
wherein the second solution is subjected to mixing, preferably vortex mixing, during or upon the addition of the buffer solution;
wherein the buffer solution has a temperature in a range of from 15°C to 45°C, preferably in a range of from 35°C to 40°C;
wherein the compound of Formula I is: 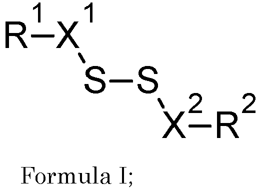
wherein the compound of Formula II is: 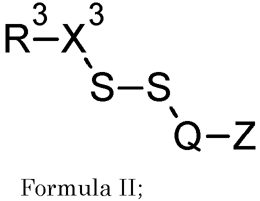
wherein R¹, R², and R³ are each independently selected from the group consisting of -C(O)O-N-succinimide, -C(O)F, -C(O)Cl, -C(O)Br, -C(O)-N₃, -C(O)O-pentafluorophenyl, -C(O)O-N-benzotriazole, -C(O)O-phthalimide, -C(O)-O-C(O)CH₃, -NCS, -NCO, -S(O)₂Cl, -S(O)₂F, phenylsulfonyl fluoride, phenylsulfonyl chloride, and C₂ epoxidyl; preferably R¹, R², and R³ are each -C(O)O-*N*-succinimide;
wherein X¹, X², and X³ are each independently selected from the group consisting of C₁-C₆ alkylene, and phenylene, preferably each of X¹, X², and X³ are ethylene; wherein Q is a bond or C₁₋₆ alkylene, preferably Q is a bond;
wherein Z is heteroaryl or aryl, preferably Z is 2-pyridyl; and wherein each alkylene, phenylene, heteroaryl, and aryl is optionally substituted.

In a further aspect, the invention relates to a fixative solution obtainable by the method for preparing a fixative solution according to the invention, wherein the concentration of the compound of Formula I in said fixative solution is in a range of from 0.8 mM to 2.4 mM, preferably in a range of from 1.0 mM to 2.0 mM, more preferably in a range of from 1.3 mM to 1.7 mM.

In yet another aspect, the invention pertains to an *in vitro* cell fixated with a fixative solution according to the invention.

In yet another aspect, the invention relates to an *in vitro* fixed cell obtainable by the *in vitro* method for fixating at least one cell according to the invention.

In yet another aspect, the invention relates to a use of the fixative solution according to the invention for fixating at least one cell.

### Brief description of the drawings

Figure 1 shows the technical quality of the QuRIE-seq transcriptomic library of PBMCs. Violin plots show a) the number of different genes detected per cell, b) the number of unique molecular identifiers filtered mapped (UMIFM) detected per cell, c) the percentage of the mitochondrial genes (>10% is a sign of stress).
Figure 2 depicts the technical quality of the QuRIE-seq proteomic library of PBMCs. Violin plots show: a) the number of different proteins detected, b) the number of protein counts per cell.

### Detailed description of the Invention

In a general sense, the invention is based on the judicious and gratifying insights to use lower concentrations of compounds of Formula I, such as DSP, when fixating cells, and that compounds of Formula II, such as SPDP, can be used to stabilize compounds of Formula I when dissolved in aqueous solutions.

The invention achieves one or more of the abovementioned desires. In a broad sense, the fixating method of the invention unexpectedly yields a better mRNA and protein quality than prior art protocols. Surprisingly, the fixating method of the invention is in particular well-suited to fixate primary cells, which was hitherto troublesome when using prior art protocols. Another advantage of the fixating method of the invention is that it is more economical than known methods, since lower fixative concentrations are used.

Furthermore, the fixative solutions of the invention are less prone to crystallization than prior art solutions, and thereby, *inter alia,* improve the reproducibility of the fixative method.

The invention is described in further detail below, and particular embodiments thereof are disclosed. In general, all embodiments of the invention can be combined as long as they are not mutually exclusive.

In the *in vitro* method for fixating at least one cell according to the invention, the at least one cell is contacted with a liquid, a compound of Formula I, and a compound of Formula II, so as to form a mixture.

It will be understood that the components of the mixture can be contacted in any order. For example, the at least one cell can be first contacted with the liquid, and then the compounds of Formula I and Formula II can be added. In various embodiments, the at least one cell can be part of a cell pellet or a cell suspension. If the at least one cell is part of a cell pellet, it is preferred that the cell pellet is disturbed, for example by vortexing, so as to reduce or even completely avoid the formation of cell clusters. If the at least one cell is part of a cell suspension, this may mean that it has been contacted with the liquid prior to being contacted with the compounds of Formula I and II. Alternatively, it may mean that the at least one cell is first suspended in a first liquid, for example an aqueous buffer or a medium without serum, and the cell suspension is then contacted with a second liquid, the compound of Formula I, and the compound of Formula II.

In preferred embodiments, the at least one cell is contacted with a fixative solution. The fixative solution comprises the liquid, the compound of Formula I, and the compound of Formula II. Preferably, the fixative solution is according to the invention, or obtainable using the method for preparing a fixative solution according to the invention. In particular if the at least one cell is already in suspension before it is contacted with the fixative solution, the concentration of the compounds of Formula I and Formula II in the fixative solution are chosen in such a way that upon contact with the cell suspension so as to form a mixture, the concentrations of the compounds of Formula I and Formula II as defined herein are achieved.

The concentration of the compound of Formula I in the mixture formed in the *in vitro* method of the invention is in a range of from 0.8 mM to 2.4 mM. In preferred embodiments, said concentration of the compound of Formula I is in a range of from 0.9 mM to 2.2 mM, more preferably in a range of from 1.0 mM to 2.0 mM, and even more preferably in a range of from 1.3 mM to 1.7 mM. While good results regarding *e.g.* protein and RNA quality can be achieved at concentrations of Formula I as low as 0.8 mM, the best results are obtained at a concentration of about 1.5 mM, which is hence most preferred.

The concentration of the compound of Formula II in the mixture is at least sufficient to dissolve substantially all of the compound of Formula I in said mixture. Thus, only a lower limit of the concentration of the compound of Formula II is set, as the invention is based, *inter alia,* on the judicious insight that the compound of Formula II can be used to dissolve and stabilize the compound of Formula I in solution. As used herein, the term "to dissolve substantially all of the compound of Formula I" indicates that hardly any crystals, preferably none at all, of said compound are formed that are visible by the naked eye. Typically, this means that at least about 95% of said compound of Formula I is dissolved, preferably at least about 97%, more preferably at least about 99%, even more preferably at least about 99.5%, and most preferably about 100%.

The required concentration of the compound of Formula II to dissolve substantially all of the compound of Formula I can be readily determined, for example by simply preparing one or more fixative solutions using the method for preparing same according to the invention, and observing the resulting fixative solution for a short period of time to see whether any crystals and/or precipitation are formed. Typically, if no precipitation is observed for the fixative solution, the same will hold for when the mixture is obtained. If desired, the latter can be readily checked by contacting the fixative solution with the at least one cell so as to form a mixture, and observe whether any crystals and/or precipitation are formed. When using the present disclosure for guidance, there is no undue burden on the skilled person to prepare for example a matrix of different concentrations of both the compound of Formula I and the compound of Formula II, and to see in which cases crystallization is observed, and in which cases the compound of Formula I is stabilized.

In general, good fixation results are obtained when in said mixture the mol/mol ratio of the compound of Formula I as compared to the compound of Formula II is at most 2:1. More preferably said mol/mol ratio is at most 1.5:1, even more preferably at most 1.1:1. In further preferred embodiments, said mol/mol ratio is in a range of from 1:2 to 2:1, more preferably in a range of from 1:1.5 to 1.5:1, even more preferably in a range of from 1:1.1 to 1.1:1. Most preferably, said mol/mol ratio is about 1:1.

As such, in preferred embodiments the concentration of the compound of Formula II in said mixture is similar to that of the compound of Formula I, viz. in a range of from 0.8 mM to 2.4 mM. In preferred embodiments, said concentration of the compound of Formula II is in a range of from 0.9 mM to 2.2 mM, more preferably in a range of from 1.0 mM to 2.0 mM, and even more preferably in a range of from 1.3 mM to 1.7 mM. While good results regarding e.g. protein and RNA quality can be achieved at concentrations of Formula II as low as 0.8 mM, the best results are obtained at a concentration of about 1.5 mM, which is hence most preferred. It will be understood that the best results are obtained if the mixture contains about 1.5 mM of the compound of Formula I and about 1.5 mM of the compound of Formula II, and more in particular if the compound of Formula I is DSP and the compound of Formula II is SPDP.

In principle, any cell type is suitable to be fixated using the *in vitro* method according to the invention. Thus, the at least one cell can be a eukaryotic cell or a prokaryotic cell. In preferred embodiments, said at least one cell is a eukaryotic cell, preferably a eukaryotic cell selected from the group consisting of cancer cells, white blood cells, red blood cells, bone marrow cells, vascular endothelial cells, hepatocytes, neurons, glial cells, bronchial endothelial cells, epidermal cells, respiratory interstitial cells, adipocytes, dermal fibroblasts, muscle cells, and germ cells.

Most preferably, the at least one cell is a primary cell. As is well-known in the art, primary cells are obtained from a multicellular organism and most closely resemble the tissue of origin. Typically, primary cells are obtained from body fluids (e.g. blood) and/or a biopsy and can be cultured *ex vivo.* In the context of the invention in all its aspects, primary cells are preferably obtained from a mammal, more preferably from a human being.

In a preferred embodiment, the at least one cell is a stimulated cell. As used herein, a stimulated has been treated with an effective amount of an inhibitor and/or an activator for certain reactions and/or entire cellular pathways. In such a way, the effect of the stimulant, which may for example be a drug, on the proteome and/or the transcriptome can be advantageously measured when compared to a control, unstimulated cell. This application is of great use in for example drug development, as it may show which pathways are influenced by a certain (candidate) drug.

In the *in vitro* method of the invention, the mixture contains at least one cell. Typically, the mixture contains multiple cells that may all be fixated. Thus, the mixture preferably comprises at least 100 cells per mL, more preferably at least 1,000 cells per mL, at least 10,000 cells per mL, at least 100,000 cells per mL, and most preferably at least 1,000,000 cells per mL. The multiple cells can all be as defined for the at least one cell, and can be of different cell types or the same cell type.

Typically, the liquid is an aqueous solution, for example an aqueous buffer solution, such as phosphate-buffered saline (PBS). In preferred embodiments, in the *in vitro* method according to the invention at least 90 vol.% of the liquid is water, more preferably at least 92 vol.%, even more preferably at least 94 vol.%, and most preferably at least 96 vol.%. Other solvents may be present in said liquid as well, such as dimethyl sulfoxide (DMSO) and/or dimethylformamide (DMF), preferably in amounts of at most 10 vol.%, more preferably at most 8 vol.%, even more preferably at most 6 vol.%, more preferably still at most 4 vol.%, yet more preferably at most 2 vol.%, and most preferably at most 1 vol.%. Preferably, the liquid does not interfere with the three-dimensional structure of the biomolecules in the cell (such as proteins and nucleic acids, in particular mRNA) to an undesired extent, so as to allow the best possible protein and/or RNA quality upon isolating said biomolecules from the cell. As such, preferably neither the liquid nor the mixture contains solvents such as methanol at concentrations which may affect the three-dimensional structure of biomolecules. Similarly, in preferred embodiments the liquid, and the resulting mixture do not comprise contaminants that may interfere with the crosslinking reactions. Such contaminants include, but are not limited to, biomolecules such as proteins and nucleic acids that are not derived from the at least one cell, as they may be subjected to crosslinking with compounds of Formulae I and II as well. For example, the liquid and the mixture preferably do not comprise serum that is otherwise typically used in buffers, and which contains many proteins.

The pH of the mixture is not critical for the *in vitro* method of the invention. In general, pH values can be chosen at which the three-dimensional structure of the biomolecules within or on the exterior of the cell, such as proteins and mRNA, is not disturbed, and the fixative reactions (between said biomolecules and the compounds of Formula I and Formula II) take place at a sufficiently high rate. As such, typical pH values for the mixture are in a range of from 6.0 to 9.0, preferably in a range of from 6.5 to 8.5, more preferably in a range of from 7.0 to 8.0, and most preferably in a range of from 7.2 to 7.6.

Upon forming the mixture, said mixture is typically disturbed by for example shaking, vortexing, stirring, or a similar action. This ensures that various components are properly mixed and the fixating reactions are most effective.

In general, the mixture is incubated for at least 10 minutes, typically at least 15 minutes, and for at most 1 hour, preferably at most 45 minutes. The incubation time depends on the chosen conditions, such as the number of cells to be fixated, the incubation temperature, etc. Preferably, the incubation time is between 15 minutes and 45 minutes, since typically then a sufficient amount of crosslinking has taken place.

During incubation the mixture is preferably kept in the dark, because the compounds of Formula I and Formula II may be light-sensitive.

Typically, the mixture is subjected to shaking or stirring during incubation. In general, only mild or gentle shaking or stirring is sufficient.

The temperature of the mixture during incubation is in general in a range of from 4°C to 50°C, preferably in a range of from 15°C to 40°C. The incubation temperature can be room temperature, i.e. about 15°C to about 25°C, but can also be around physiological temperatures, i.e. about 35°C to about 40°C.

In relation to the invention, a compound of Formula I is: 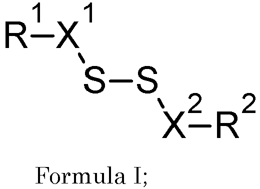 and a compound of Formula II is:

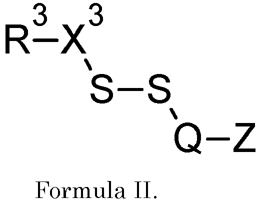

Herein, R¹, R², and R³ are groups that serve to couple the compound of Formula I or II to biomolecules in a cell, in particular proteins, thus fixating said cell. As such, R¹, R², and R³ are each independently selected from the group consisting of -C(O)O-N-succinimide, -C(O)F, -C(O)Cl, -C(O)Br, -C(O)-N₃, -C(O)O-pentafluorophenyl, -C(O)O-N-benzotriazole, -C(O)O-phthalimide, -C(O)-O-C(O)CH₃, -NCS, -NCO, -S(O)₂Cl, -S(O)₂F, phenylsulfonyl fluoride, phenylsulfonyl chloride, and C₂ epoxidyl. All these groups are excellent in reacting with moieties present on biomolecules in a cell, such as amines, hydroxyls and sulfhydryl groups. In preferred embodiments, one or more, preferably each of R¹, R², and R³ are -C(O)ON-succinimide. This groups is preferred as it is relatively stable under physiological conditions, and is easily prepared.

In Formulae I and II X¹, X², and X³ are each independently selected from the group consisting of C₁-C₆ alkylene, and phenylene. In preferred embodiments, X¹, X², and X³ are each independently selected from the group consisting of C₁-C₄ alkylene, and most preferably each of X¹, X², and X³ are ethylene. Such small alkylene groups are advantageous in reaching less accessible parts of a cell, and may increase the aqueous solubility of the compounds of Formulae I and II as compared to phenylene groups.

The moiety -S-S-Q-Z enables the compound of Formula II to react with sulfhydryl moieties present in a cell via a thiol-disulfide exchange reaction. In Formula II, Q is a bond or C₁₋₆ alkylene. Preferably Q is a bond, which is advantageous to keep said compound of Formula II small, to enable it to reach less accessible parts of a cell. Z is heteroaryl or aryl, and preferably Z is selected from the group consisting of pyridyl, quinolinyl, pyrimidinyl, pyrazinyl, pyrazolyl, imidazolyl, thiazolyl, pyrrolyl, furanyl, triazolyl, benzofuranyl, indolyl, purinyl, benzoxazolyl, thienyl, phospholyl oxazolyl, and phenylene. Most preferably, Z is 2-pyridyl.

In the compounds of Formulae I and II each alkylene, phenylene, heteroaryl, and aryl is optionally substituted. Preferably, said groups are unsubstituted, so as to keep said compounds as small as possible. Nevertheless, substituents may be present to for example increase the solubility or reactivity of said compounds if required. In such embodiments, the alkylene, phenylene, heteroaryl, and aryl are each independently substituted with one or more moieties selected from the group consisting of C₁₋₃ alkyl, -O-C₁₋₃ alkyl, -OH, -NH₂, -CONH₂, =O, -C(O)OH, -C(O)CH₃, -Cl, -Br, -F, and -I.

In preferred embodiments, the compound according to Formula I is I is dithiobis(succinimidyl propionate) (DSP). DSP has the following structure:

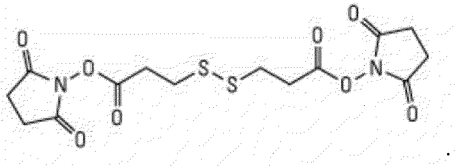

In preferred embodiments, the compound according to Formula II is succinimidyl 3-(2-pyridyldithio)propionate (SPDP). SPDP has the following structure:

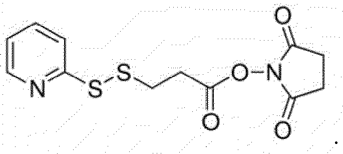

The skilled person can synthesize compounds according to Formula I and Formula II using standard starting materials and protocols that are well-known in the field of synthetic organic chemistry. In particular, it is noted that the preferred compounds DSP and SPDP are commercially available, and can be readily purchased.

The invention also provides a method for preparing a fixative solution. Surprisingly, when using this method a stable fixative solution is obtained, while with prior art protocols significant crystallization of the fixatives is typically observed. In the context of the invention, a "stable" fixative solution indicates that substantially no crystallization is observed by the naked eye at conditions and for the duration of a typical incubation step of the method of fixating at least one cell according to the invention, even when the fixative solution is diluted with an aqueous solution.

In the method for preparing a fixative solution according to the invention, in step a) a compound of Formula I is contacted with a solvent so as to form a first solution. The solvent can be any solvent in which the compound of Formula I readily dissolves, which is typically an organic solvent or a mixture of organic solvents. In general, said solvent is not an aqueous solution, since compounds of Formula I are not very soluble therein. In preferred embodiments, the solvent is dimethyl sulfoxide (DMSO), dimethyl formamide (DMF), or a combination thereof, because compounds of Formula I are very soluble in these solvents. More preferably, said solvent is DMSO, and most preferably the solvent is anhydrous DMSO so as to reduce the water content in the first solution. Preferably, the first solution is substantially free of water so as to maximize the solubility of the compound of Formula I in said first solution.

The first solution is a stock solution of the compound of Formula I, and can be stored if desired, for example at temperatures below 0°C, such as -20°C or less, and can be thawed before use. The concentration of the compound of Formula I can be adjusted by further diluting the first solution with another amount of the solvent as described herein in relation to preparing the first solution.

In step b) of said method, the first solution is contacted with a compound of Formula II, so as to form a second solution. The compound of Formula II can be added in solid form, but for ease of handling it is preferred that the compound of Formula II is provided in a stock solution. The stock solution of the compound of Formula II is preferably prepared using the same solvent as used for the first solution. Thus, in general the compound of Formula II is contacted with an organic solvent, preferably DMSO, DMF, or a combination thereof, more preferably DMSO, and most preferably anhydrous DMSO, so as to provide a stock solution of the compound of Formula II. Also this stock solution can be stored if desired, for example at temperatures below 0°C, preferably -20°C or less, more preferably about -80°C, and can be thawed before use. The concentration of the compound of Formula II can be adjusted by further diluting the stock solution with another amount of the solvent as described herein in relation to preparing the stock solution of the compound of Formula II.

In step b), it is preferred that the compound of Formula II, preferably provided as a stock solution, is added to the first solution, since then the crystallization is minimized in the final fixative solution. It is also preferred that the first solution is diluted with another amount of the solvent used to prepare the first solution, prior to the addition of the compound of Formula II.

If the stock solutions of the compounds of Formula I and Formula II, respectively, were stored in a frozen state and thawed prior to use, it is preferred that said stock solutions are used as quickly as possible upon thawing so as to minimize crystallization of said compounds in the respective stock solutions.

In step c) of the method for preparing a fixative solution according to the invention, a buffer solution is added, preferably dropwise, to the second solution, so as to form the fixative solution. Surprisingly, the inventors have found that crystallization of the fixatives in the fixative solution is decreased when during the addition the buffer solution has a temperature of at least 15°C, or in general a temperature in a range of from 15°C to 45°C. Preferably, the buffer solution has a temperature in a range of from 18°C to 43°C, more preferably from 20°C to 41°C, more preferably still from 30°C to 40°C, and most preferably in a range of from 35°C to 40°C, for example about 37°C.

In general, the buffer solution is an aqueous solution comprising a buffer that is typically used in cell studies. Preferred buffers are phosphate-buffered saline (PBS) and sodium phosphate buffered saline (NaPS). The pH of the buffer solution is typically in a range of from 6.0 to 9.0, preferably in a range of from 6.5 to 8.5, more preferably in a range of from 7.0 to 8.0, and most preferably in a range of from 7.2 to 7.6. In preferred embodiments, the buffer solution is substantially free from biomolecules, such as proteins and nucleic acids, to avoid reactions with the compound of Formula I and/or the compound of Formula II.

In preferred embodiments, the second solution is subjected to mixing when the buffer solution is added. Preferably, the mixing is carried out by vortexing, shaking, stirring, similar procedures, or a combination thereof, most preferably by vortexing. The mixing further ensures that crystallization of one or more of the fixatives is reduced.

It is also preferred that the buffer solution is added, preferably dropwise, rather quickly, again to further ensure that crystallization of one or more of the fixatives is reduced. As such, the addition of the buffer solution generally takes at most 5 minutes, preferably at most 4 minutes, more preferably at most 3 minutes, and most preferably at most 2 minutes.

The ratio of the volume of the buffer solution over the volume of the second solution is not critical to the invention, and may depend on the desired final concentration of the compounds of Formula I and Formula II in the fixative solution. In general, the ratio of the volume of the buffer solution added to the second solution over the volume of the second solution is at least 10:1, preferably at least 20:1, more preferably at least 25:1, and most preferably at least 30:1.

Throughout the method for preparing a fixative solution according to the invention, it is preferred that all solutions comprising a compound of Formula I and/or a compound of Formula II are kept in the dark, because said compounds may be light-sensitive.

The invention also relates to a fixative solution, preferably one that is obtainable by the method for preparing a fixative solution according to the invention. As discussed above, the fixative solutions prepared using the method of the invention are distinguished from known fixative solutions comprising compounds of Formula I and Formula II prepared by a higher stability, i.e. a lower amount and/or rate of crystallization of the fixatives.

The concentration of the compounds of Formula I and Formula II in the fixative solution may depend on several factors, including the conditions used in the method for fixating at least one cell. For example, if the at least one cell is provided in a cell pellet, a lower concentration of fixatives in the fixative solution may be used as compared to when the at least one cell is provided as a cell suspension. The skilled person is very well able to choose the concentration of fixatives in the fixative solution depending on the conditions used in the method for fixating at least one cell. In general, the concentration of the compound of Formula I in the fixative solution according to the invention is in a range of from 0.8 mM to 2.4 mM, more preferably in a range of from 1.0 mM to 2.4 mM, more preferably still in a range of from 1.2 mM to 2.4 mM, even more preferably in a range of from 1.3 mM to 2.4 mM, more preferably in a range of from 1.4 mM to 2.4 mM, and most preferably in a range of from 1.5 mM to 2.4 mM. Likewise, in general the concentration of the compound of Formula II in the fixative solution according to the invention is in a range of from 0.8 mM to 50 mM, more preferably in a range of from 1.0 mM to 25 mM, more preferably still in a range of from 1.2 mM to 15 mM, even more preferably in a range of from 1.3 mM to 10 mM, more preferably in a range of from 1.4 mM to 5 mM, and most preferably in a range of from 1.5 mM to 2.4 mM. In preferred embodiments, in said fixative solution the mol/mol ratio of the compound of Formula I as compared to the compound of Formula II is at most 2:1. More preferably said mol/mol ratio is at most 1.5:1, even more preferably at most 1.1:1. In further preferred embodiments, said mol/mol ratio is in a range of from 1:2 to 2:1, more preferably in a range of from 1:1.5 to 1.5:1, even more preferably in a range of from 1:1.1 to 1.1:1. Most preferably, said mol/mol ratio is about 1:1.

In preferred embodiments, the fixative solution is substantially free from biomolecules, such as proteins and nucleic acids, to avoid reactions with the compound of Formula I and/or the compound of Formula II.

Preferably, the fixative solution comprises water in an amount of at least 80 vol%, more preferably at least 85 vol%, more preferably still at least 90 vol%, even more preferably at least 95 vol%, and most preferably at least 96 vol%. The fixative solution typically also contains an organic solvent, such as DMSO, in an amount of at most 15 vol%, preferably at most 10 vol%, more preferably at most 5 vol%, and most preferably at most 4 vol%.

In preferred embodiments, the fixative solution according to the invention is used in the *in vitro* method for fixating at least one cell according to invention. Then, the at least one cell is contacted with the fixative solution, preferably within 30 minutes after preparation or thawing of the fixative solution, more preferably within 20 minutes, most preferably within 10 minutes.

As such, the invention also relates to the use of a fixative solution according to the invention for fixating at least one cell. The at least one cell is preferably as disclosed herein in relation to the *in vitro* method of the invention. This use is advantageous, as the fixative solution according to the invention is less prone to crystallization and yields better results in terms of protein and/or nucleic acid quality upon isolation of these biomolecules from the fixed cell.

The invention also pertains to an *in vitro* cell fixated with a fixative solution according to the invention, and an *in vitro* fixed cell obtainable by the *in vitro* method for fixating at least one cell according to the invention. In principle, any cell type is suitable to be fixated using the *in vitro* method or fixative solution according to the invention. Thus, the *in vitro* cell and/or the *in vitro* fixed cell can be a eukaryotic cell, or a prokaryotic cell. In preferred embodiments, said *in vitro* cell or said in *vitro* fixed cell is a eukaryotic cell, preferably a eukaryotic cell selected from the group consisting of cancer cells, white blood cells, red blood cells, bone marrow cells, vascular endothelial cells, hepatocytes, neurons, glial cells, bronchial endothelial cells, epidermal cells, respiratory interstitial cells, adipocytes, dermal fibroblasts, muscle cells, and germ cells. Most preferably, the in *vitro* cell and/or the *in vitro* fixed cell is a primary cell. In a preferred embodiment, the *in vitro* cell and/or the *in vitro* fixed cell is a stimulated cell as described above.

After the fixating step, *i.e.* step a) of the *in vitro* method for fixating at least one cell of the invention, at least one fixed cell is obtained that can be subjected to a further step of permeabilization and/or quenching, to obtain at least one permeabilized cell. The skilled person is aware of many different protocols by which permeabilization and/or quenching is achieved. For example, the mixture obtained in said step a) can be contacted with a surfactant, an enzyme, or a combination thereof. Suitable surfactants include, but are not limited to, nonionic surfactants such as Triton (in particular Triton X-100), Tween (such as Tween-20), NP40, saponins, and combinations thereof. Suitable enzymes include, but are not limited to, proteinase K, and streptolysin O. Preferably, the mixture is contacted with a permeabilization and quenching buffer containing 0.05 wt% to 0.5 wt% of a nonionic surfactant, preferably Triton X-100. The permeabilization and quenching buffer generally has a pH of about 7.0 to 8.0, and may contain sodium chloride in a range of from 100 mM to 200 mM. Additionally, an RNAse inhibitor can be added to avoid RNA degradation. Similarly, the permeabilization and quenching buffer is typically substantially free of nucleases, which can be achieved by using commercially available nuclease-free water to prepare said buffer.

In general, the permeabilization and quenching step proceeds rather quickly, and an incubation time of from 5 minutes to 25 minutes, preferably of about 10 minutes, is sufficient to permeabilize the at least one fixed cell and to quench the crosslinking reaction. Typically, the permeabilization and quenching step is carried out at the same temperature as the fixating step.

Next, the at least one permeabilized cell can be subjected to an immunostaining step so as to obtain at least one immunostained cell. In this step the at least one permeabilized cell is contacted with a labelled antibody so as to target proteins. Labels that can be used include fluorescent or phosphorescent labels, and radionuclides. In a preferred embodiment, barcoded antibodies are used, which typically contain a short and unique nucleic acid sequence, preferably a DNA sequence, so that they can later on be identified. Barcoded antibodies are commercially available, but can also be prepared in-house following a simple protocol known to the skilled person. In the latter case, an antibody can be functionalized with a moiety that is reactive in a bioorthogonal reaction, for example by contacting the antibody with dibenzocyclooctyne-S-S-*N-*hydroxysuccinimidyl ester, and thereafter contacting the functionalized antibody with a commercially available DNA sequence that contains a moiety that can react with the dibenzocyclooctyne moiety, such as an azide, and purifying the functionalized antibodies using standard techniques.

The invention also pertains to a method for encapsulating at least one permeabilized cell, which is preferably obtained as described above. The at least one permeabilized cell is preferably encapsulated using droplet microfluidics, so as to obtain at least one encapsulated cell. The use of droplet microfluidics is advantageous, as the conditions may be chosen in such a way that the majority of cells are the sole cell encapsulated in a given droplet, thus enabling single-cell analysis. In general, water-in-oil (W/O) emulsions are used, in which an aqueous droplet is surrounded by an oil phase.

Setups for preparing droplets using microfluidics are well-known in the art. The permeabilized cells are typically encapsulated in a nanoliter droplet together with at least one bead, a reducing agent, and reagents for reverse transcription. Reagents for reverse transcription are well-known in the art, and are generally commercially available.

Preferably, relatively small droplets are used, with a volume in a range of from 0.05 nL to 5 nL, more preferably from 0.1 nL to 0.5 nL. Using smaller droplets is advantageous, because its contents can be mixed better and the probability of capturing the mRNA and protein is increased.

The beads are in general connected to short sequences that are commonly referred to as primers. Preferably, a cleavable linker, such as a photocleavable linker, is used to connect the primers to the beads. It is preferred that beads are used that contain disulfide crosslinks.

The reducing agent allows decrosslinking of the nucleic acids and proteins in the at least one permeabilized cell, since the reducing agent breaks the disulfide bonds present in the compound of Formula I and the compound of Formula II. If the preferred beads containing disulfide crosslinks are used, the reducing agent will also dissolve the beads.

In principle, any reducing agent may be used, but preferably the reducing agent is selected from the group consisting of dithiothreitol (DTT), β-mercaptoethanol, tris(2-carboxyethyl)phosphine (TCEP), and combinations thereof; most preferably the reducing agent is DTT. The concentration of reducing agent in the droplet depends on the reducing agent that is selected, but in general is in a range of from 1 mM to 80 mM, preferably from 10 mM to 60 mM, and most preferably from 30 mM to 50 mM. A suitable concentration of DTT in the droplet is for example about 40 mM.

Due to the decrosslinking of the permeabilized cell, the contents of said cell are released into the droplet and both the mRNA and the proteins (e.g. via the barcoded antibodies) may bind to the primers on the at least one bead or the at least one dissolved bead that is also present within the droplet. Preferably, the primers on the beads have at least two different capture sequences that either capture the mRNA or the proteins (if barcoded antibodies are used). In such a way, the competition between long mRNA strands and short DNA tags is advantageously reduced.

By using this method of encapsulating at least one permeabilized cell, the flow rates of all inflows can be increased, which yields an advantageously short encapsulation time. Typically, the encapsulation time is about 10 times shorter than with prior art protocols.

The droplet containing the contents of the at least one encapsulated cell may be incubated at a temperature in a range of from 25°C to 45°C, preferably in a range of from 27°C to 32°C. These temperatures are advantageous, as they further improve the release of cell material upon decrosslinking. The incubation time is generally in a range of from 5 minutes to 40 minutes, preferably of from 10 minutes to 30 minutes, and most preferably of from 15 minutes to 25 minutes. After this first incubation step, the droplet may be subjected to a second incubation step at a slightly lower temperature, preferably room temperature (i.e. between 15°C and 25°C). The incubation time of the second incubation step is typically in a range of from 1 minute to 25 minutes, preferably from 5 minutes to 15 minutes.

After encapsulation or after the optional first and second incubation steps, the droplet containing the contents of the at least one encapsulated cell is typically subjected to reverse transcription. Preferably, the reverse transcription step is performed by incubating said droplet at a temperature in a range of from 45°C to 60°C, for 20 minutes to 70 minutes, preferably for 30 minutes to 60 minutes.

After reverse transcription, the droplet containing the contents of the at least one encapsulated cell is typically subjected to a library preparation step that prepares the biomaterial obtained from said cell for further analysis. Commercial protocols are available for library preparation, which for example include the 10X library protocol. A standard protocol known to the skilled person can be used.

After the library preparation, the biomaterial can be subjected to standard analysis techniques, such as sequencing analysis to obtain information on the contents of the at least one cell. The data thus obtained are analysed using standard bioinformatic tools.

Thus, the invention also relates to an *in vitro* method of analysing proteins and/or nucleic acids, in particular RNA, more preferably mRNA, from at least one cell, wherein said method comprises the steps of:
a) fixating at least one cell using the *in vitro* method for fixating at least one cell according to the invention, so as to obtain at least one in *vitro* fixed cell;
b) permeabilizing the at least one *in vitro* fixed cell, preferably using a method as described herein, so as to obtain at least one permeabilized cell;
c) immunostaining said at least one permeabilized cell, preferably using a method as described herein, so as to obtain at least one immunostained cell;
d) encapsulating the at least one immunostained cell, preferably using a method as described herein, so as to obtain at least one encapsulated cell;
e) decrosslinking and barcoding the at least one encapsulated cell, preferably using a method as described herein;
f) preparing a library of proteins and/or nucleic acids obtained from the at least one encapsulated cell in step e), preferably using a method as described herein;
g) subjecting the biomaterial to standard analysis techniques, preferably as described herein.

It will be understood that all cells used in the methods described herein were cultured *in vitro,* and/or isolated from an organism. The methods described herein are not suitable for *in vivo* use.

Herein, all terms are used in their normal scientific meaning, unless indicated otherwise. Below, the present invention will be further described with respect to particular embodiments but the invention is not limited thereto but only by the claims. Where an indefinite or definite article is used when referring to a singular noun e.g. "a" or "an", "the", this includes a plural of that noun unless something else is specifically stated. The verb "to comprise", and its conjugations, as used in this description and in the claims is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

### Examples

The invention is hereinafter illustrated with reference to the following examples. The examples are not intended to be limiting to the invention.

### Example 1: preparation of 2.5 mL of 2x concentrated fixative solution (3 mM DSP, 3 mM SPDP in phosphate buffer) for fixation of cells in suspension

DSP and SPDP powders were brought to room temperature before dissolution. Then, stock solutions of DSP and SPDP in anhydrous DMSO at concentration 50 mM were prepared. Stock solutions of DSP and SPDP can be stored at -20°C or - 80°C if not used immediately and thawed just before the use (protect from light). Preferably, avoid thawing cycles. To prepare the fixative solutions, 2.2 mL of phosphate buffer was warmed to 37°C. Then, a given volume of the stock solution of DSP was dispensed into a 15-mL empty falcon tube and the stock solution of SPDP was added. While vortexing the mixture of stock solutions of fixatives, the warm buffer was added dropwise using a 200 µl pipette within 2 minutes. Prefrably, proceed immediately to the next part (fixation of cells in suspension). The fixation should preferably be performed within 2 minutes from the moment of the preparation of the fixative solution.

### Example 2: isolation, fixation, permeabilization and immunostaining of primary cells for further microfluidic encapsulation

One bag of buffy coat (around 50 mL; Sanquin, The Netherlands) was firstly diluted to a final volume of 240 µL with Dulbecco's phosphate-buffered saline (DPBS) (Thermo Fisher Scientific, USA) containing 2 mM EDTA (Lonza, Switzerland). The diluted buffy coat was mixed gently by pipetting up and down. Then, 15 mL of Ficoll Paque Plus (GE Healthcare, USA) was overlaid with 30 mL of the diluted buffy coat that was allowed to flow down the side of the tube and pool on top of the density gradient medium without breaking the surface plane. The falcon tubes with buffy coat and Ficoll were centrifuged at room temperature (800g for 30 minutes at room temperature (RT), acceleration 6, deceleration at 0) and the layer of mononuclear cells from the plasma/Ficoll interface was collected with a disposable Pasteur pipette (VWR, USA). The collected cells were transferred into four new sterile conical tubes supported with a 70 µm nylon cell strainer (Corning, USA). The volume of tubes with pooled cells was brought to 45 mL with DPBS with 2 mM EDTA. Then, falcon tubes were centrifuged at 300g for 15 minutes (acceleration 9, deceleration at 9), starting at room temperature and gradually decreasing to 4°C. Subsequently, the supernatant was aspirated and an enriched pellet of PBMCs was first loosened, by adding 1 mL PBS, resuspended, and diluted to 45 mL with cold DPBS and EDTA. The washing step was repeated 3-6 times by centrifugation at 200g for 10 minutes at 4°C (acceleration 9, deceleration at 9), until the moment when the platelets were removed from the solution (the supernatant became transparent). Purified PBMCs were resuspended at a concentration of 4 million cells/mL in RPMI (Thermo Fisher Scientific, USA) supplemented with 1% Penicillin-Streptomycin. 1 mL of PBMCs was pipetted into FACS tubes (BD Bioscience, USA) and allowed to rest for one hour at 37°C before the addition of freshly prepared fixative solution. 1 mL of the cell suspension was immediately mixed with 1 mL of 2x concentrated fixative, briefly vortexed and fixed for 15 minutes at room temperature (protected from light). To avoid cell sedimentation and cluster formation during fixation, cells were kept on an orbital shaker. Subsequently, fixed cells were quenched and permeabilized with 1 mL of 100 mM Tris-HCl pH 7.5, 150 mM NaCl and 0.1% Triton X100 (Thermo Fisher Scientific) solution, USA) for 10 minutes at room temperature. After permeabilization, cells were washed once and blocked for 45 minutes in 0.5X protein-free blocking buffer (Thermo Fisher Scientific, USA) with 0.2 mg/mL dextran sulfate (Sigma Aldrich, USA) and 0.5 U/mLRNasin plus (Promega, USA) in PBS (Thermo Fisher Scientific, USA). Cells were stained in a blocking buffer containing DNA-tagged antibodies (98 antibodies) for one hour at room temperature. Following staining, cells were washed four times with the blocking buffer and re-suspended in PBS containing 5 mg/mL BSA (Thermo Fisher Scientific, USA) and 0.5 U/mL RNsing plus (Promega, USA). Just before encapsulation in water in oil droplets, the cell suspension was brought to a given concentration to ensure encapsulation of single cells in a droplet with barcoding beads.

The encapsulation and samples preparation were performed as described in Cell Reports Methods (2021) paper by Rivello et al., Single-cell intracellular epitope and transcript detection reveals signal transduction dynamics.

### Example 3: Analysis of RNA and protein obtained from fixated cells

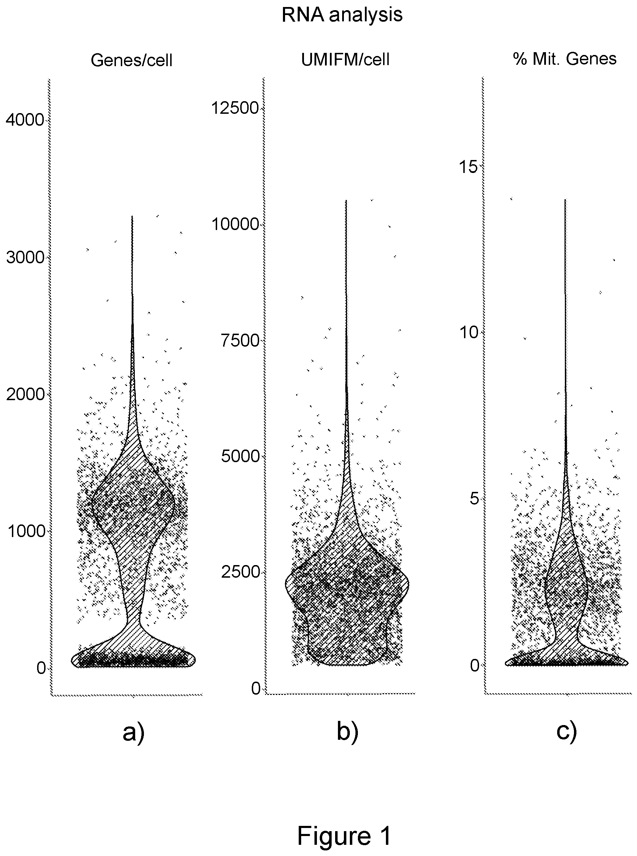

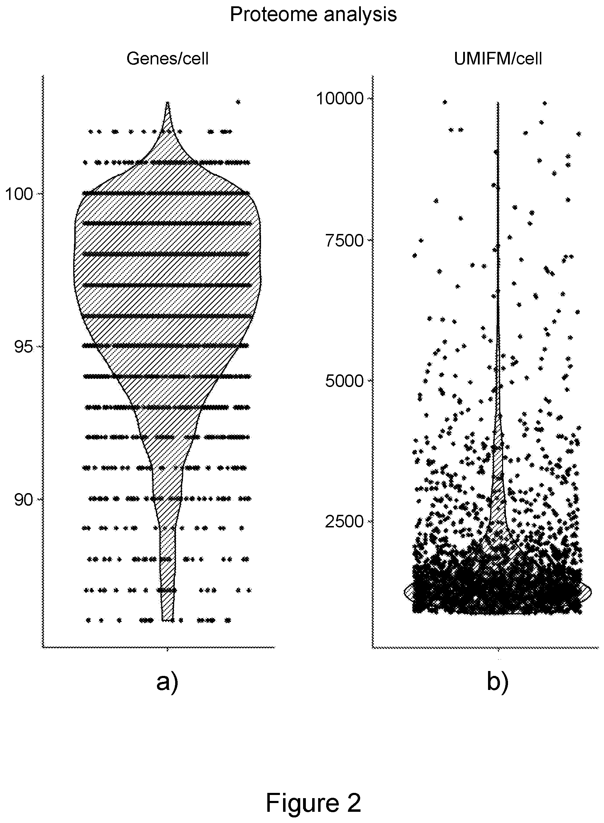

The data analysis was performed as described in Cell Reports Methods (2021) paper by Rivello et al., Single-cell intracellular epitope and transcript detection reveals signal transduction dynamics. Technical quality checks of the transcriptomic and proteomic data generated with QuRIE-seq for fixed PBMCs are presented in Figures 1 and 2. Analysis of PBMCs resulted in a high-quality RNA library (high gene counts/cell and low percentage of mitochondrial counts), and a good protein library (high protein counts, all proteins detected).

The mRNA quality obtained using the method of the invention as compared to a prior art protocol and live, unfixed cells is depicted in Table 1. Likewise, the protein detection achieved by the method of the invention as compared to a prior art protocol is shown in Table 2.

**Table 1. mRNA quality**

| **Sample: cell preparation** | **Median gene counts/cell** |
|---|---|
| Fixation method according to the invention | 1258 |
| Fixation protocol published in *Cell Report Methods* (comparative example) | 190 |
| Live (unfixed) cells* (comparative example) | 1347 |

| | |
|---|---|
| *maximum number of genes that can be detected | |

**Table 2. Protein detection**

| **Sample: cell preparation** | **Median number of different proteins detected/cell** |
|---|---|
| Fixation method according to the invention | 98/98 (all detected) |
| Fixation protocol published in *Cell Report Methods* (comparative example) | 70/80 |

## Claims

1. An *in vitro* method for fixating at least one cell, wherein said method comprises the step of
a) contacting the at least one cell with a liquid, a compound of Formula I, and a compound of Formula II, so as to form a mixture;
wherein the concentration of the compound of Formula I in said mixture is in a range of from 0.8 mM to 2.4 mM, preferably in a range of from 1.0 mM to 2.0 mM, more preferably in a range of from 1.3 mM to 1.7 mM; wherein the concentration of the compound of Formula II in said mixture is sufficient to dissolve substantially all of the compound of Formula I in said mixture; wherein the compound of Formula I is: 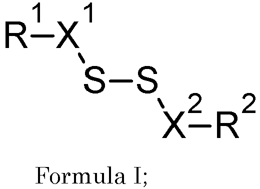
wherein the compound of Formula II is: 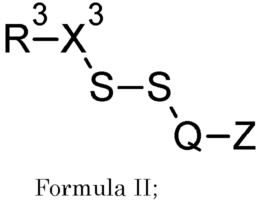
wherein R¹, R², and R³ are each independently selected from the group consisting of -C(O)O-N-succinimide, -C(O)F, -C(O)Cl, -C(O)Br, -C(O)-N₃, - C(O)O-pentafluorophenyl, -C(O)O-N-benzotriazole, -C(O)O-phthalimide, - C(O)-O-C(O)CH₃, -NCS, -NCO, -S(O)₂Cl, -S(O)₂F, phenylsulfonyl fluoride, phenylsulfonyl chloride, and C₂ epoxidyl; preferably R¹, R², and R³ are each - C(O)O-*N*-succinimide;
wherein X¹, X², and X³ are each independently selected from the group consisting of C₁-C₆ alkylene, and phenylene, preferably each of X¹, X², and X³ are ethylene;
wherein Q is a bond or C₁₋₆ alkylene, preferably Q is a bond;
wherein Z is heteroaryl or aryl, preferably Z is 2-pyridyl; and
wherein each alkylene, phenylene, heteroaryl, and aryl is optionally substituted.

2. The *in vitro* method according to claim 1, wherein in said mixture the mol/mol ratio of the compound of Formula I as compared to the compound of Formula II is at most 2:1, preferably at most 1.5:1, more preferably at most 1.1:1; preferably in a range of from 1:2 to 2:1, more preferably in a range of from 1:1.5 to 1.5:1, most preferably in a range of from 1:1.1 to 1.1:1.

3. The *in vitro* method according to any one of the preceding claims, wherein the at least one cell is a eukaryotic cell, preferably a eukaryotic cell selected from the group consisting of cancer cells, white blood cells, red blood cells, bone marrow cells, vascular endothelial cells, hepatocytes, neurons, glial cells, bronchial endothelial cells, epidermal cells, respiratory interstitial cells, adipocytes, dermal fibroblasts, muscle cells, and germ cells.

4. The *in vitro* method according to any one of the preceding claims, wherein the at least one cell is a primary cell.

5. The *in vitro* method according to any one of the preceding claims, wherein at least 90 vol.% of the liquid is water.

6. A method for preparing a fixative solution comprising a compound of Formula I and a compound of Formula II, wherein said method comprises the steps of:
a) contacting a compound of Formula I with a solvent, preferably dimethyl sulfoxide, so as to form a first solution;
b) contacting said first solution with a compound of Formula II, so as to form a second solution;
c) adding a buffer solution, preferably dropwise, to the second solution, so as to form the fixative solution;
wherein the concentration of the compound of Formula I in said fixative solution is in a range of from 0.8 mM to 2.4 mM, preferably in a range of from 1.0 mM to 2.0 mM, more preferably in a range of from 1.3 mM to 1.7 mM;
wherein the concentration of the compound of Formula II in said fixative solution is sufficient to dissolve substantially all of the compound of Formula I in said fixative solution;
wherein the second solution is subjected to mixing, preferably vortex mixing, during or upon the addition of the buffer solution;
wherein the buffer solution has a temperature in a range of from 15°C to 45°C, preferably in a range of from 35°C to 40°C;
wherein the compound of Formula I is: 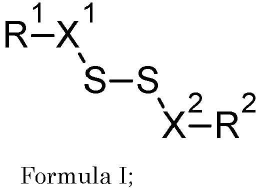
wherein the compound of Formula II is: 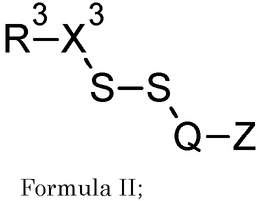
wherein R¹, R², and R³ are each independently selected from the group consisting of -C(O)O-*N*-succinimide, -C(O)F, -C(O)Cl, -C(O)Br, -C(O)-N₃, - C(O)O-pentafluorophenyl, -C(O)O-N-benzotriazole, -C(O)O-phthalimide, - C(O)-O-C(O)CH₃, -NCS, -NCO, -S(O)₂Cl, -S(O)₂F, phenylsulfonyl fluoride, phenylsulfonyl chloride, and C₂ epoxidyl; preferably R¹, R², and R³ are each -C(O)O-*N*-succinimide;
wherein X¹, X², and X³ are each independently selected from the group consisting of C₁-C₆ alkylene, and phenylene, preferably each of X¹, X², and X³ are ethylene;
wherein Q is a bond or C₁₋₆ alkylene, preferably Q is a bond;
wherein Z is heteroaryl or aryl, preferably Z is 2-pyridyl; and
wherein each alkylene, phenylene, heteroaryl, and aryl is optionally substituted.

7. The *in vitro* method according to any one of claims 1 to 5 or the method according to claim 6, wherein the compound of Formula I is dithiobis(succinimidyl propionate) (DSP).

8. The *in vitro* method according to any one of claims 1 to 5, and 7 or the method according to any one of claims 6 and 7, wherein the compound of Formula II is succinimidyl 3-(2-pyridyldithio)propionate (SPDP).

9. The method according to any one of claims 6 to 8, wherein in said fixative solution the mol/mol ratio of the compound of Formula I as compared to the compound of Formula II is at most 2:1, preferably at most 1.5:1, more preferably at most 1.1:1; or wherein said mol/mol ratio is in a range of from 1:2 to 2:1, preferably in a range of from 1:1.5 to 1.5:1, more preferably in a range of from 1:1.1 to 1.1:1.

10. A fixative solution obtainable by the method according to any one of claims 6 to 9; wherein the concentration of the compound of Formula I in said fixative solution is in a range of from 0.8 mM to 2.4 mM, preferably in a range of from 1.0 mM to 2.0 mM, more preferably in a range of from 1.3 mM to 1.7 mM.

11. An *in vitro* cell fixated with a fixative solution according to claim 10.

12. The *in vitro* cell according to claim 11 , wherein said in *vitro* cell or said in *vitro* fixed cell is a eukaryotic cell, preferably a eukaryotic cell selected from the group consisting of cancer cells, white blood cells, red blood cells, bone marrow cells, vascular endothelial cells, hepatocytes, neurons, glial cells, bronchial endothelial cells, epidermal cells, respiratory interstitial cells, adipocytes, dermal fibroblasts, muscle cells, and germ cells.

13. The *in vitro* cell according to any one of claims 11 and 12, wherein said *in vitro* cell or said *in vitro* fixed cell is a primary cell.

14. The use of the fixative solution according to claim 10 for fixating at least one cell.

## Patentansprüche

1. *In-vitro*-Verfahren zur Fixierung mindestens einer Zelle, wobei das Verfahren den Schritt umfasst von:
a) Inkontaktbringen der mindestens einen Zelle mit einer Flüssigkeit, einer Verbindung der Formel I, und einer Verbindung der Formel II, um eine Mischung zu bilden;
wobei die Konzentration der Verbindung der Formel I in der Mischung in einem Bereich von 0,8 mM bis 2,4 mM, vorzugsweise in einem Bereich von 1,0 mM bis 2,0 mM, bevorzugter in einem Bereich von 1,3 mM bis 1,7 mM ist;
wobei die Konzentration der Verbindung der Formel II in der Mischung ausreichend ist, um im Wesentlichen alles der Verbindung der Formel I in der Mischung zu lösen; wobei die Verbindung der Formel I ist: 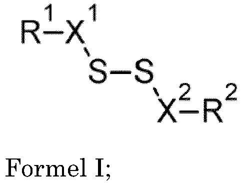
wobei die Verbindung der Formel II ist: 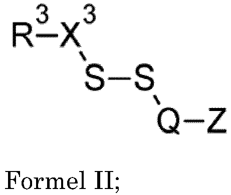
wobei R¹, R² und R³ jeweils unabhängig voneinander ausgewählt sind aus der Gruppe bestehend aus -C(O)O-N-Succinimid, -C(O)F, -C(O)Cl, - C(O)Br, -C(O)-N₃, -C(O)O-Pentafluorphenyl, -C(O)O-N-Benzotriazol, - C(O)O-Phthalimid, -C(O)-O-C(O)CH₃, -NCS, -NCO, -S(O)₂Cl, -S(O)₂F, Phenylsulfonylfluorid, Phenylsulfonylchlorid, und C₂-Epoxidyl; wobei vorzugsweise R¹, R² und R³ jeweils -C(O)O-N-Succinimid sind;
wobei X¹, X² und X³ jeweils unabhängig voneinander ausgewählt sind aus der Gruppe bestehend aus C₁-C₆-Alkylen und Phenylen, wobei vorzugsweise X¹, X² und
X³ jeweils Ethylen sind;
wobei Q eine Bindung oder C₁₋₆-Alkylen ist, wobei Q vorzugsweise eine Bindung ist;
wobei Z Heteroaryl oder Aryl ist, wobei Z vorzugsweise 2-Pyridyl ist; und
wobei jedes Alkylen, Phenylen, Heteroaryl und Aryl optional substituiert ist.

2. In-vitro-Verfahren nach Anspruch 1, wobei in der Mischung das Mol/Mol-Verhältnis der Verbindung der Formel I im Vergleich zur Verbindung der Formel II höchstens 2:1, vorzugsweise höchstens 1.5:1, bevorzugter höchstens 1.1:1 ist; vorzugsweise in einem Bereich von von 1:2 bis 2:1, bevorzugter in einem Bereich von von 1:1.5 bis 1.5:1, am bevorzugtesten in einem Bereich von von 1:1.1 bis 1.1:1.

3. In-vitro-Verfahren nach einem der vorstehenden Ansprüche, wobei die mindestens eine Zelle eine eukaryotische Zelle ist, vorzugsweise eine eukaryotische Zelle, ausgewählt aus der Gruppe bestehend aus Krebszellen, weißen Blutkörperchen, roten Blutkörperchen, Knochenmarkszellen, vaskulären Endothelzellen, Hepatozyten, Neuronen, Gliazellen, Bronchialendothelzellen, Epidermiszellen, interstitiellen Zellen der Atemwege, Adipozyten, dermalen Fibroblasten, Muskelzellen und Keimzellen.

4. In-vitro-Verfahren nach einem der vorstehenden Ansprüche, wobei die mindestens eine Zelle eine Primärzelle ist.

5. In-vitro-Verfahren nach einem der vorstehenden Ansprüche, wobei mindestens 90 Vol.-% der Flüssigkeit Wasser ist.

6. Verfahren zur Herstellung einer Fixierlösung, umfassend eine Verbindung der Formel I und eine Verbindung der Formel II, wobei das Verfahren die Schritte umfasst von:
a) Inkontaktbringen einer Verbindung der Formel I mit einem Lösungsmittel, vorzugsweise Dimethylsulfoxid, um eine erste Lösung zu bilden;
b) Inkontaktbringen der ersten Lösung mit einer Verbindung der Formel II, um eine zweite Lösung zu bilden;
c) Zugeben einer Pufferlösung, vorzugsweise tropfenweise, zu der zweiten Lösung, um die Fixierlösung zu bilden;
wobei die Konzentration der Verbindung der Formel I in der Fixierlösung in einem Bereich von von 0,8 mM bis 2,4 mM, vorzugsweise in einem Bereich von 1,0 mM bis 2,0 mM und bevorzugter in einem Bereich von 1,3 mM bis 1,7 mM ist;
wobei die Konzentration der Verbindung der Formel II in der Fixierlösung ausreichend ist, um im Wesentlichen alles der Verbindung der Formel I in der Fixierlösung zu lösen;
wobei die zweite Lösung während oder bei der Zugabe der Pufferlösung einem Mischen, vorzugsweise einem Vortex-Mischen, unterzogen wird;
wobei die Pufferlösung eine Temperatur in einem Bereich von 15 °C bis 45 °C, vorzugsweise in einem Bereich von 35 °C bis 40 °C, hat;
wobei die Verbindung der Formel I ist: 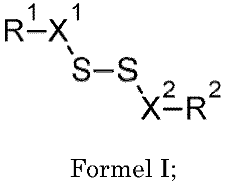
wobei die Verbindung der Formel II ist: 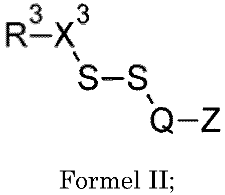
wobei R¹, R² und R³ jeweils unabhängig voneinander ausgewählt sind aus der Gruppe bestehend aus -C(O)O-N-Succinimid, -C(O)F, -C(O)Cl, - C(O)Br, -C(O)-N₃, -C(O)O-Pentafluorphenyl, -C(O)O-N-Benzotriazol, - C(O)O-Phthalimid, -C(O)-O-C(O)CH₃, -NCS, -NCO, -S(O)₂Cl, -S(O)₂F, Phenylsulfonylfluorid, Phenylsulfonylchlorid und C₂-Epoxidyl; wobei vorzugsweise R¹, R² und R³ jeweils -C(O)O-N-Succinimid sind;
wobei X¹, X² und X³ jeweils unabhängig voneinander ausgewählt sind aus der Gruppe bestehend aus C₁-C₆-Alkylen und Phenylen, wobei vorzugsweise X¹, X² und X³ jeweils Ethylen sind;
wobei Q eine Bindung oder C₁₋₆-Alkylen ist, wobei Q vorzugsweise eine Bindung ist;
wobei Z Heteroaryl oder Aryl ist, wobei Z vorzugsweise 2-Pyridyl ist; und
wobei jedes Alkylen, Phenylen, Heteroaryl und Aryl optional substituiert ist.

7. In-vitro-Verfahren nach einem der Ansprüche 1 bis 5 oder Verfahren nach Anspruch 6, wobei die Verbindung der Formel I Dithiobis(succinimidylpropionat) (DSP) ist.

8. In-vitro-Verfahren nach einem der Ansprüche 1 bis 5 und 7 oder Verfahren nach einem der Ansprüche 6 und 7, wobei die Verbindung der Formel II Succinimidyl-3-(2-pyridyldithio)propionat (SPDP) ist.

9. Verfahren nach einem der Ansprüche 6 bis 8, wobei in der Fixierlösung das Mol/Mol-Verhältnis der Verbindung der Formel I im Vergleich zur Verbindung der Formel II höchstens 2:1, vorzugsweise höchstens 1.5:1, bevorzugter höchstens 1.1:1 ist; oder wobei das Mol/MolVerhältnis in einem Bereich von von 1:2 bis 2:1, vorzugsweise in einem Bereich von von 1:1,5 bis 1,5:1, bevorzugter in einem Bereich von von 1:1.1 bis 1.1:1 ist.

10. Fixierlösung, erhältlich durch das Verfahren nach einem der Ansprüche 6 bis 9, wobei die Konzentration der Verbindung der Formel I in der Fixierlösung in einem Bereich von von 0,8 mM bis 2,4 mM, vorzugsweise in einem Bereich von 1,0 mM bis 2,0 mM und bevorzugter in einem Bereich von 1,3 mM bis 1,7 mM ist.

11. In-vitro-Zelle, fixiert mit einer Fixierlösung nach Anspruch 10.

12. *In-vitro*-Zelle nach Anspruch 11, wobei die *In-vitro*-Zelle oder die *in vitro* fixierte Zelle eine eukaryotische Zelle ist, vorzugsweise eine eukaryotische Zelle, ausgewählt aus der Gruppe bestehend aus Krebszellen, weißen Blutkörperchen, roten Blutkörperchen, Knochenmarkszellen, vaskulären Endothelzellen, Hepatozyten, Nervenzellen, Gliazellen, Bronchialendothelzellen, Epidermiszellen, interstitiellen Zellen der Atemwege, Adipozyten, dermalen Fibroblasten, Muskelzellen und Keimzellen.

13. *In-vitro*-Zelle nach einem der Ansprüche 11 und 12, wobei die *In-vitro*-Zelle oder die *in vitro* fixierte Zelle eine Primärzelle ist.

14. Verwendung der Fixierlösung nach Anspruch 10 zum Fixieren mindestens einer Zelle.

## Revendications

1. Procédé *in vitro* pour fixer au moins une cellule, dans lequel ledit procédé comprend l'étape de
a) mise en contact de la ou des cellules avec un liquide, un composé de formule I et un composé de formule II, de manière à former un mélange ;
dans lequel la concentration du composé de formule I dans ledit mélange est dans la plage allant de 0,8 mM à 2,4 mM, de préférence dans la plage allant de 1,0 mM à 2,0 mM, plus préférentiellement dans la plage allant de 1,3 mM à 1,7 mM ; ;
dans lequel la concentration du composé de formule II dans ledit mélange est suffisante pour dissoudre substantiellement tout le composé de formule I dans ledit mélange ; dans lequel le composé de formule I est : 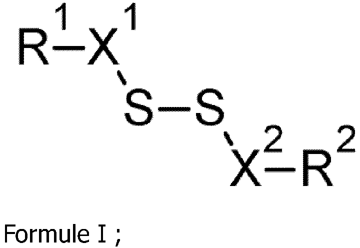
dans lequel le composé de formule II est : 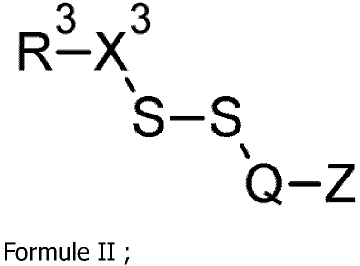
dans lequel R¹, R² et R³ sont chacun indépendamment sélectionnés dans le groupe constitué de -C(O)O-*N*-succinimide, -C(O)F, -C(O)Cl, -C(O)Br, -C(O)-N₃, -C(O)O-pentafluorophényle, -C(O)O-N-benzotriazole, -C(O)O-phtalimide, -C(O)-O-C(O)CH₃, -NCS, -NCO, -S(O)₂Cl, -S(O)₂F, fluorure de phénylsulfonyle, chlorure de phénylsulfonyle et époxydyle en C₂ ; de préférence R¹, R² et R³ sont chacun -C(O)O-N-succinimide ;
dans lequel X¹, X² et X³ sont chacun indépendamment sélectionnés dans le groupe constitué de alkylène en C₁-C₆ et phénylène, de préférence chacun de X¹, X² et X³ est éthylène ;
dans lequel Q est une liaison ou un alkylène en C₁-₆, de préférence Q est une liaison ;
dans lequel Z est un hétéroaryle ou un aryle, de préférence Z est 2-pyridyle ; et
dans lequel chaque alkylène, phénylène, hétéroaryle et aryle est éventuellement substitué.

2. Procédé *in vitro* selon la revendication 1, dans lequel, dans ledit mélange, le rapport mol/mol du composé de formule I au composé de formule II est au plus de 2:1, de préférence au plus de 1,5:1, plus préférentiellement au plus de 1,1:1 ; de préférence dans la plage allant de 1:2 à 2:1, plus préférentiellement dans la plage allant de 1:1,5 à 1,5:1, et tout particulièrement dans la plage allant de 1:1,1 à 1,1:1.

3. Procédé *in vitro* selon l'une quelconque des revendications précédentes, dans lequel l'au moins une cellule est une cellule eucaryote, de préférence une cellule eucaryote sélectionnée dans le groupe constitué de cellules cancéreuses, leucocytes, érythrocytes, cellules de moelle osseuse, cellules endothéliales vasculaires, hépatocytes, neurones, cellules gliales, cellules endothéliales bronchiques, cellules épidermiques, cellules interstitielles respiratoires, adipocytes, fibroblastes dermiques, cellules musculaires et cellules germinales.

4. Procédé *in vitro* selon l'une quelconque des revendications précédentes, dans lequel l'au moins une cellule est une cellule primaire.

5. Procédé *in vitro* selon l'une quelconque des revendications précédentes, dans lequel au moins 90 % vol. du liquide sont de l'eau.

6. Procédé de préparation d'une solution fixatrice comprenant un composé de formule I et un composé de formule II, dans lequel ledit procédé comprend les étapes de :
a) mise en contact d'un composé de formule I avec un solvant, de préférence le diméthylsulfoxyde, de manière à former une première solution ;
b) mise en contact de ladite première solution avec un composé de formule II, de manière à former une deuxième solution ;
c) ajout d'une solution tampon, de préférence goutte à goutte, à la deuxième solution, de manière à former la solution fixatrice ;
dans lequel la concentration du composé de formule I dans ladite solution fixatrice est dans la plage allant de 0,8 mM à 2,4 mM, de préférence dans la plage allant de 1,0 mM à 2,0 mM, plus préférentiellement dans la plage allant de 1,3 mM à 1,7 mM ;
dans lequel la concentration du composé de formule II dans ladite solution fixatrice est suffisante pour dissoudre substantiellement tout le composé de formule I dans ladite solution fixatrice ;
dans lequel la deuxième solution est soumise à un mélange, de préférence un mélange vortex, pendant ou lors de l'ajout de la solution tampon ;
dans lequel la solution tampon a une température dans la plage allant de 15 °C à 45 °C, de préférence dans la plage allant de 35 °C à 40 °C ;
dans lequel le composé de formule I est : 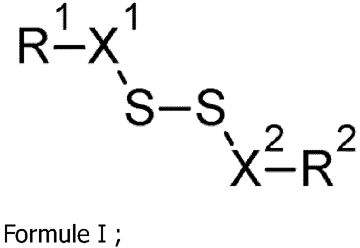
dans lequel le composé de formule II est : 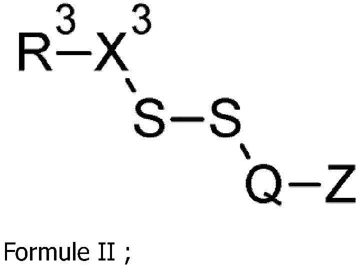
dans lequel R¹, R² et R³ sont chacun indépendamment sélectionnés dans le groupe constitué de -C(O)O-*N*-succinimide, -C(O)F, -C(O)Cl, -C(O)Br, -C(O)-N₃, -C(O)O-pentafluorophényle, -C(O)O-N-benzotriazole, -C(O)O-phtalimide, -C(O)-O-C(O)CH₃, -NCS, -NCO, -S(O),Cl, -S(O)₂F, fluorure de phénylsulfonyle, chlorure de phénylsulfonyle et époxydyle en C₂; de préférence R¹, R² et R³ sont chacun -C(O)O-N-succinimide ;
dans lequel X¹, X² et X³ sont chacun indépendamment sélectionnés dans le groupe constitué de alkylène en C₁-C₆ et phénylène, de préférence chacun de X¹, X² et X³ est éthylène ;
dans lequel Q est une liaison ou un alkylène en C₁₋₆₋ de préférence Q est une liaison ;
dans lequel Z est un hétéroaryle ou un aryle, de préférence Z est 2-pyridyle ; et
dans lequel chaque alkylène, phénylène, hétéroaryle et aryle est éventuellement substitué.

7. Procédé *in vitro* selon l'une quelconque des revendications 1 à 5 ou procédé selon la revendication 6, dans lequel le composé de formule I est le dithiobis(propionate de succinimidyle) (DSP).

8. Procédé *in vitro* selon l'une quelconque des revendications 1 à 5 et 7 ou procédé selon l'une quelconque des revendications 6 et 7, dans lequel le composé de formule II est le 3-(2-pyridyldithio)propionate de succinimidyle (SPDP).

9. Procédé selon l'une quelconque des revendications 6 à 8, dans lequel dans ladite solution fixatrice le rapport mol/mol du composé de formule I au composé de formule II est au plus de 2:1, de préférence au plus de 1,5:1, plus préférentiellement au plus de 1,1:1 ; ou dans lequel ledit rapport mol/mol est dans la plage allant de 1:2 à 2:1, de préférence dans la plage allant de 1:1,5 à 1,5:1, plus préférentiellement dans la plage allant de 1:1,1 à 1,1:1.

10. Solution fixatrice obtenable par le procédé selon l'une quelconque des revendications 6 à 9 ; dans laquelle la concentration du composé de formule I dans ladite solution fixatrice est dans la plage allant de 0,8 mM à 2,4 mM, de préférence dans la plage allant de 1,0 mM à 2,0 mM, plus préférentiellement dans la plage allant de 1,3 mM à 1,7 mM.

11. Cellule *in vitro* fixée avec une solution fixatrice selon la revendication 10.

12. Cellule *in vitro* selon la revendication 11, dans laquelle ladite cellule *in vitro* ou ladite cellule fixée *in vitro* est une cellule eucaryote, de préférence une cellule eucaryote choisie dans le groupe constitué de cellules cancéreuses, leucocytes, érythrocytes, cellules de moelle osseuse, cellules endothéliales vasculaires, hépatocytes, neurones, cellules gliales, cellules endothéliales bronchiques, cellules épidermiques, cellules interstitielles respiratoires, adipocytes, fibroblastes dermiques, cellules musculaires et cellules germinales.

13. Cellule *in vitro* selon l'une quelconque des revendications 11 et 12, dans laquelle ladite cellule *in vitro* ou ladite cellule fixée *in vitro* est une cellule primaire.

14. Utilisation de la solution fixatrice selon la revendication 10 pour fixer au moins une cellule.
